# EUROPEAN PATENT APPLICATION

(11) **EP 2 648 143 A1**
(43) Date of publication of application: **09.10.2013**
(21) Application number: 13162102.1
(22) Date of filing: 03.04.2013
(51) Int. Cl.: G06Q 10/08

(54) **System and method for providing immediate confirmation for shipping services**

(30) Priority: 03.04.2012 US 201261619848 P
(71) Applicant: Inttra Inc., Parsippany, NJ 07054 (US)
(72) Inventor: Haney, Robert, Parsippany, NJ 07054 (US); Latanision, Ivan, Parsippany, NJ 07054 (US); Ivinski, Jeffrey, Parsippany, NJ 07054 (US); Chang, John, Parsippany, NJ 07054 (US)
(74) Representative: Grünecker, Kinkeldey, Stockmair & Schwanhäusser

(57) **Abstract**

A method and related system allow reservations of shipping slots on a vessel. The method includes accepting for pre-allocation from a carrier, slots on a voyage of the vessel, corresponding carrier booking numbers for the slots, and shipping rules for the slots. A booking request from a shipper is accepted to reserve one or more of the pre-allocated slots on the vessel, together with shipping information for the booking request. The shipping information is correlated against the shipping rules for the slots to determine if the booking request can be accepted. If the booking request can be accepted, the carrier booking numbers corresponding to the reserved slots are then provided to the shipper, and the corresponding slots are marked as reserved.

## Description

### CROSS-REFERENCE TO RELATED APPLICATIONS

This application is claims the benefit of U.S. Provisional Application No. 61/619,848, filed April 3, 2012, the contents of which are incorporated herein by reference.

### BACKGROUND OF THE INVENTION

1. Field of the Invention

The present invention generally relates to shipping services. In particular, the present invention relates to methods and related systems for providing instant confirmation from a carrier to a shipper for the booking of shipping services.

2. Description of the Related Art

When a person or company wishes to ship goods ("the shipper"), the shipper must contact an appropriate shipping company (hereinafter collectively termed "the carrier") either directly or through an intermediary, such as a freight forwarder, carrier booking company or the like. In most cases, this requires telephonically or otherwise contacting the carrier, providing a description of the goods to be shipped, and awaiting upon an Ocean Carrier Booking Number ("OCBN") for one or more slots on a vessel. This manual process is both time-consuming and tedious for the shipper. Although methods exist for the electronic exchange of information between a carrier (or its representative, such as a freight forwarder) and a shipper, such as Electronic Data Exchange (EDI) as developed by the National Institute of Standards and Technology, such systems nevertheless do not permit a shipper to receive instant (i.e, within 5 minutes or less) confirmation of slots from a carrier.

### SUMMARY OF THE INVENTION

In one aspect, a method, and corresponding system, is disclosed for reserving shipping slots on a vessel. The method includes accepting for pre-allocation from a carrier slots on a voyage on the vessel, corresponding carrier booking numbers for the slots, and shipping rules for the slots. Then, a booking request from a shipper is accepted to reserve one or more of the pre-allocated slots on the vessel, together with shipping information for the booking request. The shipping information is correlated against the shipping rules for the slots to determine if the booking request can be accepted. If the booking request can be accepted, the carrier booking number corresponding to the reserved slots are then provided to the shipper, and the corresponding slots are marked as reserved.

In preferred embodiments, a notification is provided to the carrier indicating that the booking request has been accepted, which notification includes the shipping information.

In other embodiments, the pre-allocation of slots and corresponding business rules and carrier booking numbers are associated on a vessel-voyage level. Additional, container yard information may be accepted on the vessel-voyage level for the pre-allocated slots.

### BRIEF DESCRIPTION OF THE DRAWINGS

The various aspects and embodiments disclosed herein will be better understood when read in conjunction with the appended drawings, wherein like reference numerals refer to like components. For the purposes of illustrating aspects of the present application, there are shown in the drawings certain preferred embodiments. It should be understood, however, that the application is not limited to the precise arrangement, structures, features, embodiments, aspects, and devices shown, and the arrangements, structures, features, embodiments, aspects and devices shown may be used singularly or in combination with other arrangements, structures, features, embodiments, aspects and devices. The drawings are not necessarily drawn to scale and are not in any way intended to limit the scope of this invention, but are merely presented to clarify illustrated embodiments of the invention. In these drawings:

Fig. 1 is functional diagram of an embodiment system.

Fig. 2 is an example user interface that enables a carrier to pre-allocate slots on a vessel voyage basis.

Fig. 3 is an example user interface that enables carrier to indicate container yards for slots on a vessel voyage basis.

Fig. 4 is an example user interface that enables a carrier to set shipping business rules for slots on a vessel voyage basis.

Fig. 5 is an example user interface that provides a summary of slot allocations to a carrier for associated vessel voyage records.

Fig. 6 is an example user interface that shows shipping business rules in effect for slots associated with a vessel voyage record.

Figure 7 illustrates an embodiment user interface that helps a shipper to find a suitable vessel, voyage and port of origin.

Figure 8 illustrates an embodiment user interface that allows a shipper to request additional slots from a carrier for instant confirmation purposes.

Figure 9 illustrates an embodiment user interface that allows a shipper to indicate how many and what types of slots are desired for booking purposes.

Figure 10 illustrates an embodiment user interface that enables a shipper to input requisite booking information.

Figure 11 is an example of a user interface indicating an error with an instant confirmation booking.

Figure 12 is an example of a user interface indicating a successful instant confirmation booking.

### DETAILED DESCRIPTION OF THE PREFERRED EMBODIMENTS

Various embodiments of the invention provide methods and related systems to deliver instant confirmations to a shipper while still maintaining control of the booking process with a carrier. For purposes of the following, an "instant confirmation" is a shipping confirmation notice, such as an OCBN or the like, that a shipper receives within 5 minutes of submitting a shipping request, and which can be used by the shipper as confirmation of a reservation of corresponding slots on a vessel.

An "instant confirmation" preferably includes confirmation issued or provided by the carrier that is sufficient to accept carriage of a booking request placed by the shipper, and which is delivered to the or shipper within 5 minutes. Further, the confirmation preferably contain sufficient details, such as empty container pick up location, earliest container pick up time, and full container drop off deadline, that allow the shipper to progress the shipment to the next step, which is to make arrangements to pick up the empty container from the carrier in order to load the cargo.

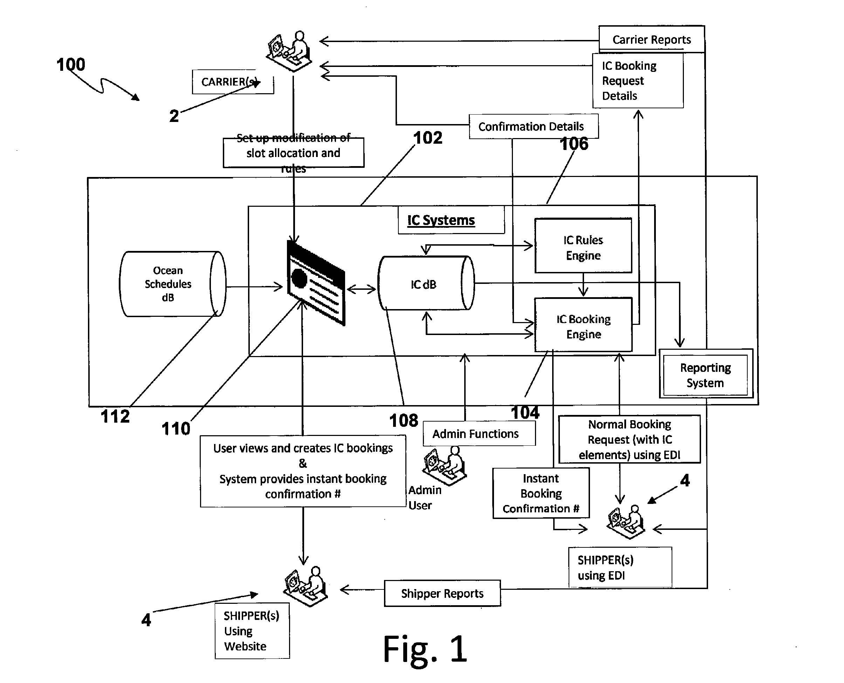

Embodiment methods and systems relate, for example, to websites that provide new functionality and a new carrier-facing user interface that enables a carrier (including, as indicated above, a shipping company, a carrier booking agent or a non-vessel operating common carrier), to pre-allocate slots to the system booking portal at the vessel voyage level. Once slots are pre-allocated, the carrier can dynamically associate specific shipping rules as needed to maintain control of the slot allocations. At the same time, in certain embodiments, the carrier is also able to promote to qualified shippers that the vessel/voyage allocation is available and will deliver an instant confirmation for booking of related slots. A preferred embodiment system 100, as illustrated in Figure 1, may include a server 102 supporting four functional elements, which may focus on vessel voyages, as follows:

**1. Slot Allocation:** An instant confirmation ("IC") booking engine 104 supports the instant confirmation of slots to a shipper 4 using previously-allocated slots to the system 100 by the carrier 2. The availability of these slots in the booking portal 102 are used to automatically trigger an instant confirmation to qualified shippers 4.

**2. Shipping Rules:** An IC rules engine 106 associates specific shipping rules (as stored in a database 108, discussed below) to vessel voyages, so that the carrier 2 is able to maintain tight control of slot allocations. Instant confirmations preferably only issue to qualified shippers 4 as determined by the shipping rules engine 106. Carriers 2 can add or remove rules 106 dynamically based upon, for example, space availability and demand to promote or restrict slots as the case may be.

**3. User Interface:** A user interface 110 permits carriers 2 and shippers 4 to access the system 100, as set forth in more detail in the following. The user interface 110 accepts respective requests from shippers 4 and carriers 2 to provide instant confirmations of slot allocations requests to shippers 4, and advisories to carriers 2 of slots that have been allocated. The user interface 110 also permits carriers 2 to manage the slots that they allocate on a vessel voyage level, and the respective shipping business rules for such voyages.

However, access to the system 100 is not limited only to web interfaces. Various embodiments of the invention can also support other access methods, such as making use of EDI system interfaces or the like. For example, as shown in Fig. 1, the system 100 may support direct links to select shippers 4 that more intimately integrate with the computing systems of the shippers 4, such as via an EDI interface, a terminal and related communications protocol or the like. A similar arrangement can also be made for select carriers 2. EDI is particularly preferred as it is typically part of existing infrastructure and thus the embodiment system 100, using any suitable hardware, may interface with existing EDI interfaces and thereby provide an effective "instant confirmation upgrade" for shippers 4 and carriers 2 without the shippers 4 or carriers 2 needing to substantially physically alter their existing infrastructure. Hence, it will be appreciated that the user interface 110 is not limited to only web portals, although such website implementations offer advantages in being generally universally accessible.

**4. IC Database:** A database 108 holds information related to slots, their allocations and related shipping business rules and other associated information needed to support the system 100, as discussed in the following. The database 108 may also store, for example, access (i.e., login) credentials of the various users 2, 4 and store settings and preferences for each of the users 2, 4, as described in the following. Although indicated as a single entity, it will be appreciated that the database 108 and related engine may be distributed across one or more files, and even across one or more file servers and/or database engines. Nevertheless, such distributed systems, as known in the art, may be logically interconnected to provide the desired functionality of the database 108 as set forth herein.

The shipper 4 receives an instant booking confirmation when the carrier 2 qualifications are met as determined by the rules engine 106. In some embodiments of the invention the system 100 may support advertisements for the carriers 2; the carrier 2 advertisements and related information may be stored, for example, in the IC database 108. If the shipper 4 is motivated to know when instant confirmations are available, then the shipper 4 can subscribe to the carrier 2 promotions via the user interface 110. When a shipper 4 signs up for carrier 2 promotions, then the shipper 4 may also indicate the trade lanes that are utilized. Therefore, when the carrier 2 triggers a vessel voyage promotion it can be distributed to shippers 4 who have indicated they are active in the trade and are interested in receiving related "instant confirmation" notifications.

The user interface 110 enables the carriers 2 to dynamically add rules and tightly control allocations on vessel voyages when space is limited and at the same time add promotions when capacity is high, which can give the carrier 2 intake management tools by leveraging the system booking portal 100. Using these tools, the carrier 2 is converted from low value "on the phone" order taking to higher value intake management activities.

As indicated above, a preferred system 100 implementing a method according to an embodiment of the invention is a server programmed to perform the various steps of the method, which in preferred embodiments is a website server, and thus the user interface 110 is implemented in the form of one or more web pages, as known in the art. However, as previously indicated, it is also preferred that the system also support other protocols, such as EDI messaging with carriers 2 and shippers 4 using, for example, conventional hardware resources already in place. It will be further appreciated that systems other than websites may also be supported, such as dedicated terminals or the like. Or, in another embodiment, a first software related to a carrier-facing user interface of the system may run on the carrier's 2 own computer system and communicate with an external system running a second software that supports a user interface for the shippers and a related IC database. Other variations are also possible and within the scope of the invention. For example, in one embodiment the carrier 2 is provided a direct data feed to the server 100 to make slot allocations and the like, as discussed in more detail below, while a website interface 110 may be provided for other users 4 of the system.

Typically, the system 100 may include one or more central processing units (CPUs) in communications with memory and suitable telecommunications hardware. The memory, which may be a combination of volatile and non-volatile memory as known in the art, may include program code executable by the one or more CPUs to cause the CPUs to perform the specific method steps and to communicate with other devices via the telecommunications hardware, preferably using known protocols such TCP/IP, HTTP, SMTP, EDI and the like, although proprietary protocols could also be used, such as with respect to a direct data feed for carriers 2 as mentioned above. The memory may also include data, such as in the form of the database 108 or the like, that stores information required for the operations of the system 100, such as client (shipper 4 and carrier 2) information, including shipping rules, shipping allocations, confirmation numbers and the like. The CPUs and memory may be housed within a single server or groups of servers co-located with each other, or may be dispersed geographically and communicating with each other via the telecommunications hardware.

In a preferred embodiment, which is implemented as a website using standard protocols known in the art, a website server presents a carrier user interface 110 with which a carrier 2 may enter information, using any suitably-designed web interface, into the website 100 and thus into the server database 108. Information may include, for example, the names of vessels, the scheduled dates, times or both of departure and arrival of the respective vessels, and the number of shipping slots pre-allocated for instant confirmation purposes for each vessel voyage. A shipping slot may be any predetermined unit of shipping that a shipper may request for carrying goods and that a carrier may pre-allocate. In preferred embodiments, a shipping slot is in the form of a standard shipping container, the size of which may be indicated by appropriate interaction with the website 110. Hence, each slot may have a one-to-one correspondence to a shipping container on a vessel.

Advantageously, in some embodiments both shippers 4 and carriers 2 may, via suitable user interfaces 110, take advantage of third-party shipping databases 112 to find suitable vessel voyages. Such databases 112, as known in the art, are continuously updated and contain information about shipping routes, such as vessel names, sailing dates and time, destinations, arrival dates and times, etc.

In preferred embodiments, when pre-allocating slots with the IC system 102, a carrier 2 also provides a series of Ocean Carrier Booking Numbers ("OCBN") to be used by the IC system to indicate the successful reservation of a give slot or multiple slots as requested by the shipper. To provide the shipper 4 the instant confirmation that a slot or slots have been booked on a vessel, the system 102 is configured to return to the shipper 4 the corresponding a OCBN for each successful IC booking. Any given IC booking may encompass one or many pre-allocated slots on a vessel. Hence, if a shipper 4 requests, for example, three slots on vessel X, assuming that the shipper 4 matches the shipping rules 106 of the carrier 2 for those slots, the system 102 will immediately book the three slots for the shipper 4 on vessel X and return to the shipper 4 one corresponding OCBNs for the booked slots. Alternatively, the system may provide three separate OCBNs, one for each booked slot, depending upon the preference of the shipper 4, for example. Of course, the slots are then marked in the database 108 as reserved and the system 102 sends a corresponding message to the carrier 2 indicating the booking of the slots and providing details of the transaction, such as shipper-related information and requirements as obtained from the database 108. Any suitable communications protocol may be used between the IC system 102 and the carrier 2, shipper 4 or both for relaying information, including the EDI protocol, web services, XML, FTP, HTTP, HTTPS, SMTP and the like. The exact protocol used may be determined, for example, by the configuration used for the underlying IC system 102. For example, in a website-based system 102 that faces both the carriers 2 and shippers 4 by way of suitable user interfaces 110, HTTPS may be used for the shipper-side 4 communications in conjunction with SMTP, while EDI and HTTPS may be used for communications with the carriers 2. Of course, other arrangements are certainly possible.

As indicated previously, when pre-allocating slots to the system 102, a carrier 2 may set certain shipping rules 106 for the pre-allocated slots, either collectively or on a slot-by-slot basis, as well as provide the corresponding OCBNs for the pre-allocated slots. Setup and control of shipping rules 106 may be supported by use of any suitable user interface 110, such as check boxes or the like to indicate the application of a rule, text entry boxes to provide a field of information needed to further process a rule, etc. These shipping rules 106 may include, but certainly are not limited to:

A. Whether the material being shipped is hazardous or non-hazardous;

B. Whether the material being shipped is heavy or light (i.e., whether the container maximum weight load is substantially met or not);

C. Preferred customers of the carrier 2;

D. Slot allocation minimums;

E. Slot price;

F. Refrigeration requirements (if any);

G. Carrier-specific shipping rules;

H. Rules to allow, disallow or both specific commodities;

I. Rules to allow only certain container sizes (i.e. 40ft, 20ft);

J. Rules to interface with an Equipment Management system that will ensure availability of Equipment (i.e., to ensure that the equipment and the container are the same);

K. Rules to allow loading, unloading or both only at specific ports along a transit;

L. Rules to allow, disallow or both less than a container load (LCL);

M. Rules to permit automatic cancellation of one or more pre-allocated slots, such as based upon crossing a date threshold or other events of importance to the carrier 2; and

N. Rules to generate warnings, messages or like to alert the carrier 2 when the pre-allocated slots are nearing depletion (i.e, few unbooked slots remain for a vessel voyage) so that the carrier 3 may allocate additional slots to the system for that vessel voyage, if available and desired.

To facilitate entry of shipping rules 106, the system 102 may include a set of standard shipping rules that are common across all carriers 2 and carrier-specific rules that a carrier 2 may impose upon one or more slots for that carrier 2 only. Slots are preferably allocated at the vessel voyage level (i.e., the rules are the same for all slots on a particular vessel voyage), but variations for imposing rules on slots are certainly possible. For example, rules could be imposed upon individual slots for each vessel voyage, which would be a highly fine-grained allocation of rules, or, at the other extreme, rules could be imposed across all slots for all vessel voyages, which would be a very course-grained allocation of rules. Variations and mixtures of these extremes are possible; for example, the website 110 may be configured to allow a carrier 2 to "drill down" to a level of specificity desired for the application of rules to slots. However, it is believed that application of rules across slots at the vessel voyage level is ideal.

Rules 106 may further be based upon default templates preconfigured by the respective carriers 2. Such templates may alleviate entry of information that is common across all vessel voyages for that carrier 2; for a vessel voyage, a carrier 2 may begin with a template pre-populated with rules 106 as earlier determined by the carrier 2, and thus the carrier 2 need only change those rules 106 for the vessel voyage that are unique to that voyage. Shipping rules 106, and templates, may be setup by an administrator of the carrier 2, for example. However, an administrator of the system 102 may also help the carrier 2 setup a shipping rule 106, depending, for example, upon the complexity of the rule. In preferred embodiments, once a shipping rule 106 has been setup, the rule 106 is available for use by the carrier user 2, and the carrier user 2 can then dynamically apply or remove rules 106 to any allocation of slots.

The system 102 may facilitate login verification of both shippers 4 and carriers 2, including administrators and standard users of each, as known in the art, such as by appropriate registering with the system via a login name and corresponding password. In this manner, the system 102 can associate specific carrier 2 or shipper 4 information with a specific transaction with the system 102, and can further distinguish between carrier 2 administrators (who can setup shipping rules 106, for example) and standard users. Just as carriers 2 may enter vessel, slot pre-allocation and shipping rules information 106 into the database 108, a shipper 4 may also enter shipper-related information into the database 108, such as name, address, weight of material being shipped, destination, recipient, contents of material being shipped, whether the material is hazardous or not, refrigeration requirements, etc. Some information may be enterable only by a shipping administrator, for example, while other information may be entered by a standard user.

The system 102 may also facilitate one or more search functions, such as one that permits a shipper 4 to search for suitable routes, vessels or both to ship goods to a desired destination. By way of example, the system 100 may employ one or shipping databases 112, which could be present as part of the IC system 102, provided by third parties or both. When returning a list of possible vessels for such shipments as gleaned from the shipping database 112, the IC system 102 may indicate, such as with a flag or the like, that instant confirmation is available for a vessel if that vessel has vacant, pre-allocated slots registered with the IC system 102. When such a vessel is selected by the user 4, the system uses the shipper-related information stored in the database 108 and compares it against the corresponding shipping rules 106 for the slots pre-allocated for that vessel. If the shipper 4 information meets the shipping rules 106, the system 102 can then provide the corresponding OCBNs for the slots reserved by the shipper 4. Cross-checking of shipping rules 106 against a shipper 4 may be performed while presenting search results, after the shipper 4 requests slots, or combinations thereof. If performed while presenting search results and, based on shipper 4 information known at the time, that the shipper 4 cannot meet the shipping rules 106 for a slot, then preferably no "instant notification available" flag is presented for the vessel.

Carriers 2 can use shipping rules 106 as a regulator to balance load on shipping routes. For example, a carrier 2 may impose more stringent shipping rules 106 on popular routes, and less stringent rules on under-utilized routes. Further, the shipping rules 106 may be dynamically changed by the carrier 2. For example, as a departure date approaches and slots remain unbooked, a carrier 2 may steadily relax its shipping rules 106 for those unallocated slots. Further, in preferred embodiments, when the departure date for a vessel nears a predetermined threshold, such as week, and pre-allocated slots remain unbooked, the system 102 may issue a notification of such to the carrier 2 to permit the carrier 2 to release these slots so that they may be booked in a more conventional manner. Released slots, and their corresponding OCBNs, may thus be removed from the memory 108 or otherwise tagged as unusable.

Although a preferred embodiment of the invention employs a one-to-one correspondence between slots and OCBNs, it will be appreciated that other arrangements are possible. For example, if a shipper 4 requests multiple slots on a vessel, rather than returning a corresponding multiple number of OCBNs for those slots as an instant confirmation notice, the system 102 may instead return only one OCBN, and then send a message to the carrier 2 indicating that this single OCBN is being used to reserve the multiple shipping slots.

Similarly, if a shipper 4 requires only a portion of a container, and hence only a portion of a slot, the system 102 may, for example, interface with a suitable shipping consolidator for that slot, and provide a confirmation number obtained from the consolidator that is then forwarded to the shipper 4, while providing to the consolidator the OCBN for the entire slot.

The following sets forth in more detail one specific embodiment system containing various aspects described above. However, it will be appreciated that numerous other variations and embodiments are possible. For purposes of the following, reference is still drawn with respect to the embodiment system 100 illustrated in Fig. 1

An embodiment system 100 includes, at a high level of abstraction, various logical components that interrelate with each other, as outlined in the following.

A first component may provide for the configuration of IC allocations by the carrier 2, and includes user interfaces 110 to configure the rules engine 106 and slot allocations (such as to create, modify or both), an interface 110 to permit the uploading of Excel spreadsheets (or the equivalent, such as comma separated values files, etc.) as an alternative flow for entering carrier-related data, and to utilize the shipping database 112 as a read-only source of shipping data.

Another module is directed to shipper 4 booking requests, and includes user interfaces 110 to search and select allocations, and booking user interfaces 110 that are "IC aware," as previously indicated; user interfaces for shipper 4 booking requests that interface with legacy systems, such as EDI, and shipper 4 instant confirmation reporting, which also preferably integrate with legacy EDI-based systems as well as including suitable web-based user interfaces, email notifications and the like.

Another module may provide for carrier 2 and shipper 4 instant confirmation reporting, while yet another module handles carrier 2 confirmations. Each of these logical modules will be discussed in more detail in the following. It will be appreciated that these logical modules may be implemented as suitable program code executed by the CPU(s) present in the system 100 to achieve the desired functionality discussed herein.

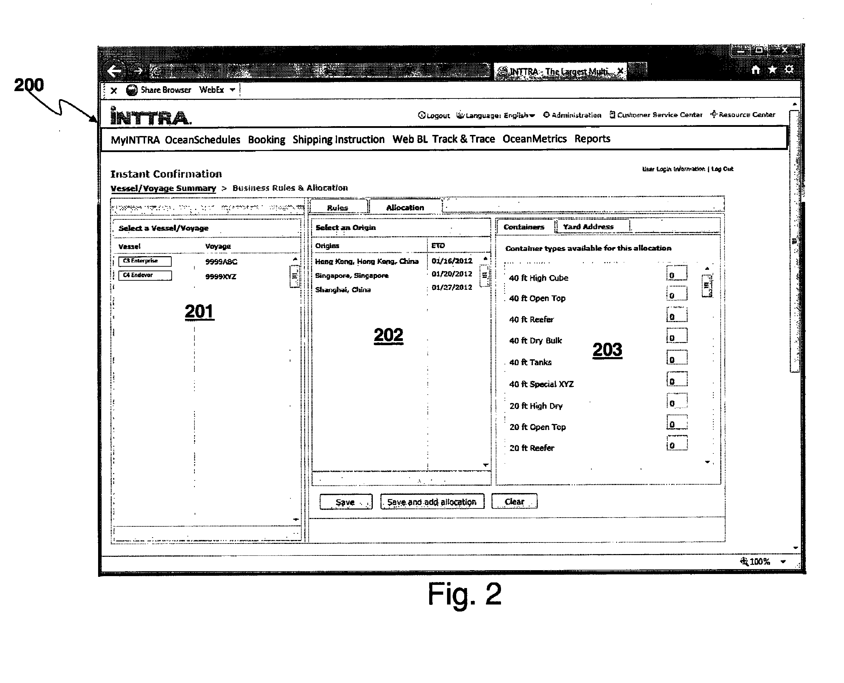

An example webpage 200 as part of the user interface 110 for the creation of slot allocations by a carrier 2 is depicted in Fig. 2. The user interface 110, as provided by webpage 200, enables a carrier 2 to allocate space on a specific vessel voyage by, for example, container type, which information is then stored in the database 108 of the IC system 102 for future use. The carrier 2 can subsequently associate shipping business rules 106 for slot allocations in the vessel voyage record ("VVR" -- discussed in more detail in the following).

The carrier 2 may first search for a vessel voyage using, for example, a search interface integrated with the shipping database 112, for example by searching for a vessel name, a port of origin, a destination port, date or the like. A list of vessel voyages found in this manner may be placed in a voyage selection interface 201, which allows the carrier 2 to select a specific vessel voyage.

Because the system 100 has access to route information in the shipping database 112, once a vessel voyage is selected using the voyage selection interface 201, the system 100 can use the route information in the shipping database 112 for the selected voyage to populate the various ports that the selected vessel will call upon on its voyage into an origin selection interface 202. Hence, once a vessel voyage is selected via voyage selection interface 201, origin selection interface 202 enables the carrier 2 to select a port of origin for the selected vessel voyage. Each combination of (vessel voyage + origin) can represent a unique IC Vessel Voyage Record (VVR), which is managed by the database 108 for slot allocation purposes. Once a VVR has been indicated via selection of a port of origin in the origin selection interface 202, the carrier 2 can then indicate slots per container type on a selected vessel voyage for that port of origin, i.e., for that VVR, using the slot allocation interface 203. Preferably, all valid container types are available to the carrier 2 user for slot allocation purposes, such as: 20gp, 20Reefer, 40gp, 40HC, 45HC, 40Reefer, 53gp and Other. By way of example, if the carrier 2 indicates five 20gp containers, and seven 20Reefer containers, then the carrier 2 will have pre-allocated 12 slots to the VVR. The database 108 keeps track of the container type of each of these pre-allocated slots, how many have been reserved (and by whom), the respective OCBNs of the slots, and how many slots still remain for IC purposes. In preferred embodiments, OCBNS are provided by the carriers 2 using any suitable user interface 110 and are then stored in database 108. OCBNs provided preferably are equal or greater to the number of slot allocated to ensure an OCBN is always available even if each slot is booked one at a time by the shippers.

In one embodiment, the carrier 2, using a suitable user interface 110, provides a range of OCBNs that the system 100 may then draw upon when generating instant confirmation messages. For example, the carrier 2 may allocate to the system 100 a range of numbers from XXXX to XXXX+49, that is, 50 numbers as potential OCBNs. As the system 100 generates IC messages, it steadily works its way through this range to provide corresponding OCBNs to shippers 4 for their respective confirmed booking requests, keeping track of which OCBNs in the range are available, and which have been used and thus reserved, using any suitable method. Of course, the carrier 2 may allocate any range of numbers to the system 100, and not merely the 50 indicate as an example. Further, when allocating OCBNs to the system 100, the carrier 2 indicates the preferred formatting of the OCBNs, and, optionally, how subsequent OCBNs in the range are to be created, so that the OCBNs provided to a shipper 4 are consistent with those of the carrier 2. When the system 100 is running low on potential OCBNs, such as fewer than 25 remaining or the like, the system 100 may send a message (using any suitable protocol as discussed herein) to the carrier 2 indicating this situation and allowing the carrier 2 to then pre-allocate another range of OCBNs to the system 100.

In an alternative embodiment, the system 100 may request an OCBN directly from the carrier 2 when generating an IC message for a shipper 4, such as by way of a web services portal set up by the carrier 2. In such embodiments, the system 100 uses the networking hardware and any suitable predetermined protocol to query a web services portal of the carrier 2 to request an OCBN from that carrier 2; such a query may include, for example, booking information provided by the shipper 4. Upon receiving the OCBN from the carrier 2, the received OCBN is stored in the database 108 in association with its related slots that are being reserved by the shipper 4.

The user interface 110 may also support suitable webpages that perm it the carrier 2 to manually enter in vessel voyage and port of origin information, as well as arrival and departure dates and times and other relevant information for a VVR. Alternatively, the user interface 110 can permit the carrier to upload XLS or CSV files to input vessel voyage information for VVR slot allocation purposes.

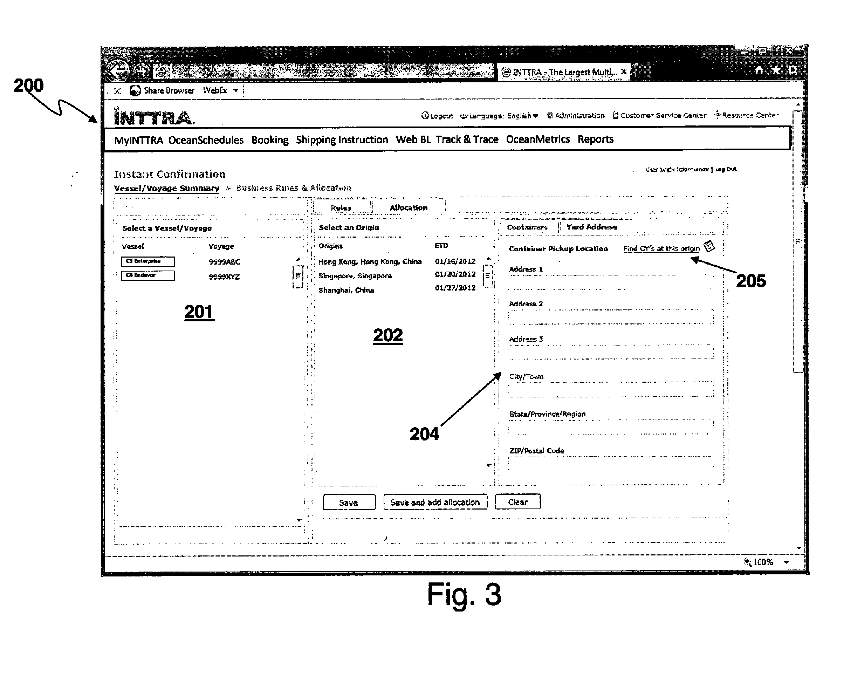

As illustrated in Figure 3, using a tabbed interface for example, the user interface 110 also provides an interface 204 for container yard maintenance at the VVR level for allocated slots. This tabbed interface can allow the carrier 2 to conveniently switch between slot allocation and container yard management for the VVR. The interface 204 allows the carrier 2 to enter a standard list of container yards by origin, which will then be associated in the database 108 for the related slot allocations; that is, the entered container yard information is correlated with the VVR in the database 108. For convenience, the interface 204 may include a link 205 or the like to another interface that allows the carrier 2 to look up known container yards at the port of origin for the VVR, which may then be selected for that VVR. In this manner, the carrier 2 can indicate to a shipper 4 the specific container yard where the empty container(s) is to be picked up for the confirmed slots.

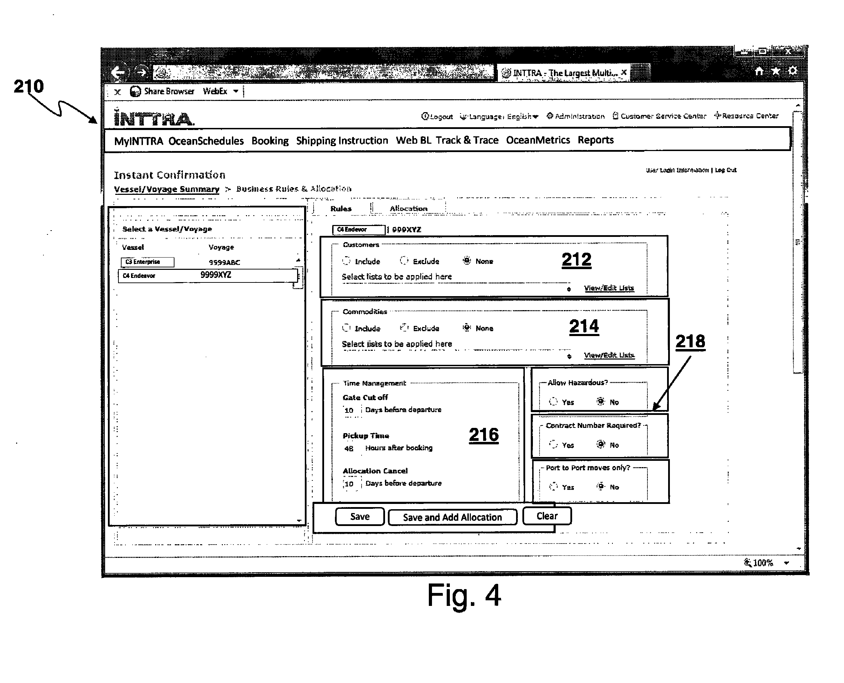

As illustrated in Figure 4, slots allocated for a VVR may then be associated with shipping business rules for the rules engine 106. Conveniently, this may be done by clicking on a "Rules" tab associated with the origin selection interface 202. Hence, in this embodiment, rules are applied on a VVR basis of granularity. Using the rules interface 210, the carrier 2 can select from a list of available shipping rules to create the association of rules with the VVR. By way of example, the following rules are preferably supported.

A shipper indication interface 212 allows the carrier 2 to enter shippers 4 to INCLUDE or EXCLUDE them for the VVR. When an INCLUDE rule is used, only shippers 4 that are part of that carrier's 2 "include" group are eligible for instant confirmation for slots in the related VVR. In this manner, for popular routes, for example, carriers 2 can provide IC exclusivity for preferred customers 4 only. Similarly, an EXCLUDE list can be created and maintained. In preferred embodiments, INCLUDE and EXCLUDE rules are mutually exclusive. One can be used or the other, but not both. When an EXCLUDE rule is used, any shipper 4 may be otherwise eligible for the instant confirmation of slots in the related VVR (assuming all other rules are met), unless that shipper 4 is in the EXCLUDE group, in which case the excluded shipper 4 cannot receive instant confirmation for the slots in that VVR.

Both INCLUDE and EXCLUDE lists can be configured using the same interface 212, which allows the carrier 2 to enter the related shippers 4, and then use a radio button or the like to indicate if the listed shippers 4 are part of the INCLUDE or EXCLUDE group. Another interface, such as drop-down boxes, list boxes or even separate pop-up search screens or the like may also be provided to enable the carrier 2 to conveniently select shippers 4 for inclusion or exclusion purposes.

Similarly, the VVR may have related INCLUDE and EXCLUDE lists for commodities, which information can be provided by a commodities indication interface 214, analogous to the shipper indication interface 212. If an INCLUDE list is used, then the carrier 2 will agree to IC only for shippers 4 wishing to ship commodities present in the INCLUDE list. If the EXCLUDE list is used, then the carrier 2 may otherwise offer IC for all commodities to be shipped, unless they land in the EXCLUDE list.

A time management interface 216 can allow the carrier 2 to manage time-related variables associated with slots in the VVR, such as a gate cut-off value, which is the number of days before departure for gate cut-off purposes (i.e., the last time that a full container can be delivered to the terminal at the port), and which can then be used to calculate the container cut-off date as (ETD - N), where "ETD" is the estimated time of departure, and "N" is the gate cut-off value (as number of days). Another time value includes the container pickup time, which may be entered in hours to indicate the earliest time when an empty container can be picked up, and which can be used to calculate the container pickup date as, for example (booking date + hours). Preferably, the container pickup time ranges from 0 to 72 hours. Another rule allows the carrier 2 to cancel pre-allocated slots when fewer than a selected number of days remain prior to departure. For example, if this value were 10, then 10 days before voyage departure, all un-unused pre-allocated slots for the related VVR would be canceled; hence, after that date, no IC would be possible for slots in that VVR. In effect, the slots in the VVR are "returned" back to the carrier 2.

Finally, various Boolean rule selection fields can be provided for suitable rules, such as whether hazardous materials are allowed, if a contract number with the shipper 4 is required, and if Port to Port Only shipping is required. In each case, the information provided by the shipper 4 when requesting slots from the carrier 2 must meet each Boolean requirement to obtain an instant confirmation of the desired slots in that VVR.

Because the generation of these rules may be somewhat time-consuming for the carrier, it is preferred that the user interface 110 supports a feature that allows the carrier 2 to copy a particular VVR allocation and related rules to a different selected group of one or more VVRs. Also, or alternatively, the use of templates may be supported to achieve substantially the same results. For example, a template may be setup in a manner analogous to the steps discussed above and then saved with a corresponding identifying name in the database 108. Thereafter, when creating a new VVR, the user interface 110 may present the option of starting from a template; for example, a list box of template names may be presented to the carrier 2. Once a template name is selected, the related slot allocations, shipping rules and container yards for the selected template are used to populate the corresponding fields in the new VVR. Thereafter, the carrier 2 need only change those fields that differ from the selected template.

The system 100 preferably allows the carriers 2 to manage existing slot allocations in a flexible and dynamic manner. For example, the user interface 110 can allow a carrier 2 to receive an IC status report off line and then navigate to an IC carrier management interface to update changes to allocation, rules or recurrence as needed.

For example, the system 100 may provide an allocation management report to the carrier 2 on, for example, a daily basis, or, more preferably, on a time basis indicated by the carrier 2 (a configuration screen can be provided to customize this and other aspects of the system 100 for each carrier 2). This report can be sent via email, such as a PDF or XLS attachment. The report can list all VVRs with active allocations including, for example, information related to the original pre-allocation of slots to the system 100 for IC purposes, the number of instant confirmations issued against these pre-allocated slots, the number of IC slot modifications made, the remaining slots to be allocated, and the shipping business rules associated to the allocations.

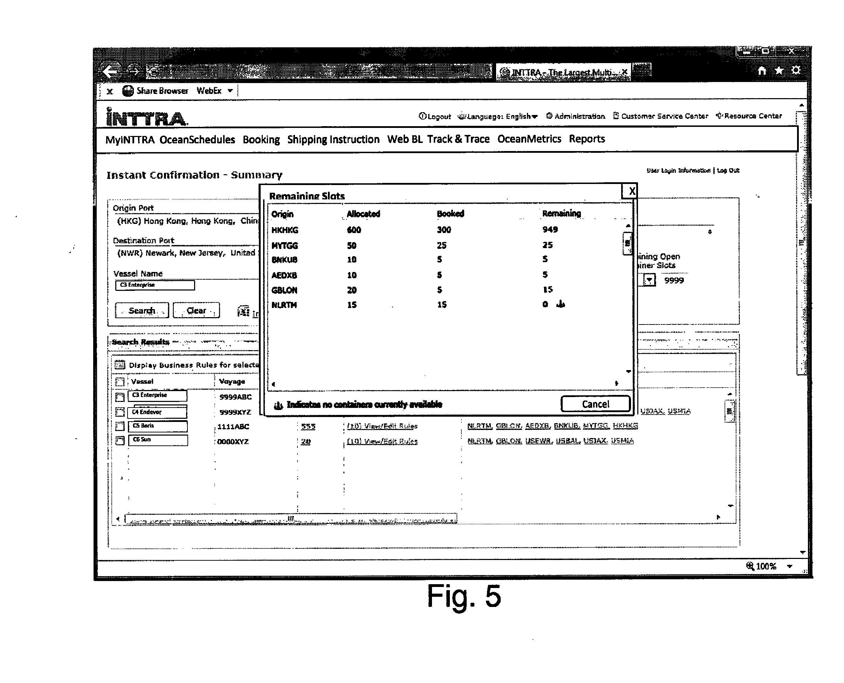

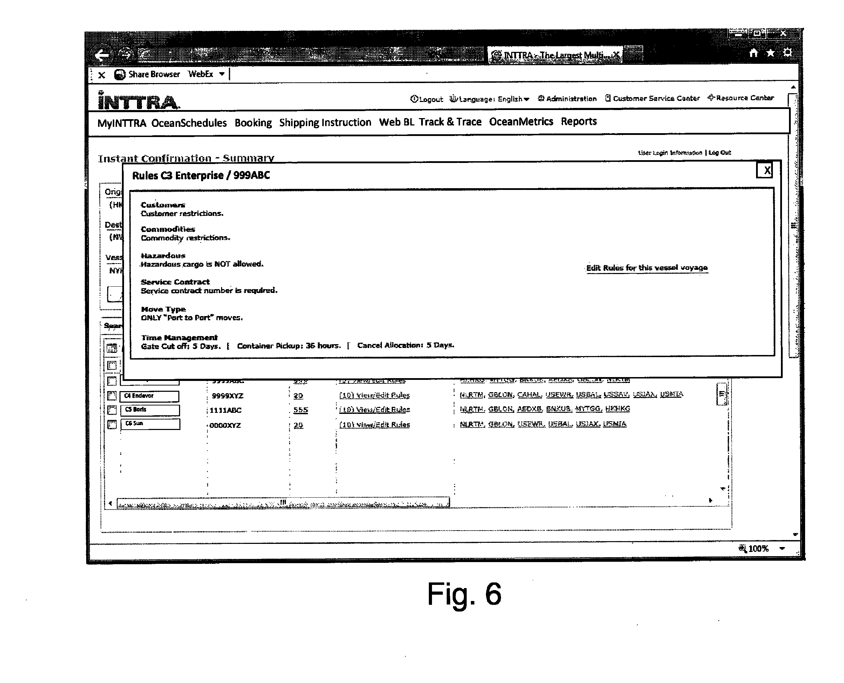

Further, it will be appreciated that the user interface 100 also permits the carrier 2 to revisit the screens discussed above so as to be able to modify the allocations of slots to a VVR and the related rules and container yard information for a VVR. The user interface 110 may also provide screens that present to the carrier 2 the slots remaining for each established VVR (as illustrated in Figure 5), and the rules associated with an established VVR (as illustrated in Figure 6).

Of course, the system 100 must also support shipper 4 booking requests, and the user interface 110 is also configured for this purpose. The user interface 110 allows a shipper 4 to find IC eligible shipments, review allocation status and rules requirements and submit IC booking requests. For example, in response to a corresponding query from the shipper 4, the system 100 searches the database 108 and then uses the interface 110 to present to the shipper 4 IC eligible shipments on a VVR basis (i.e., a vessel voyage and port of origin basis), remaining (i.e., unallocated) slots available for that VVR, and the associated shipping business rules for the VVR.

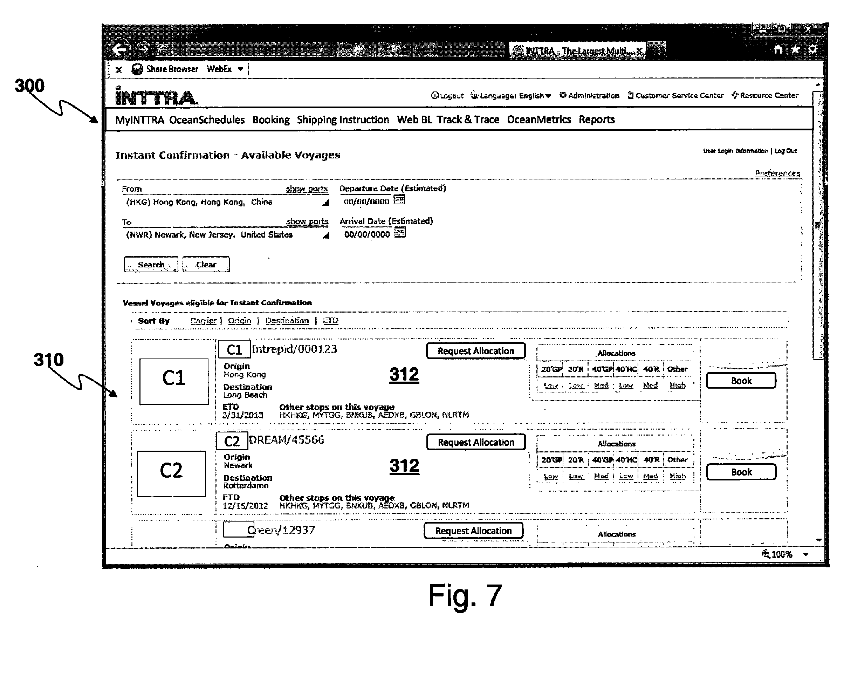

An example search page 300 is shown in Figure 7. By way of one type of search, the webpage 300 permits the shipper 4 to enter one or more of a source port, a destination port, departure date and arrival date. The system 100 then uses the entered information to search the shipping database 112 for corresponding vessel voyages. These voyages are then presented as a list 310, with each entry 312 in the list 310 being a vessel voyage and origin, and thus may correspond to a carrier 2 VVR in the database 108 if the corresponding carrier 2 has pre-allocated slots with the system 100. It will be appreciated that the user interface 110 may support further refinements to such searches, such as allowing the shipper 4 to filter hits so as to view only selected carriers 2, view only vessel voyages corresponding to selected ports of origin, view only vessel voyages corresponding to selected destination ports, view only vessel voyages having selected container types, etc.

Because the shipper 4 typically must log into the system 100, the system 100 has the identity of the shipper 4 and can cross-reference this against the INCLUDE and EXCLUDE fields for shippers 4 in the database 108. If the shipper 4 is not eligible to book using IC because the related carrier 2 has purposefully excluded them using either an INCLUDE or EXCLUDE rule, then the related VVR data will not appear in the list 310. Consequently, the shipper 4 will be unable to use the system 100 to make any sort of booking with the VVR of that carrier 2, regardless of whether the booking is an instant confirmation booking or even a more conventional booking.

On the other hand, assuming the shipper 4 is not excluded, then the shipper 4 may request a booking by clicking on a button or the like related to the entry 312 for the VVR of the carrier 2 that the shipper 4 is interested in. When a booking is so requested, and if the request is eligible for instant confirmation (i.e., the related carrier 2 has pre-allocated slots with the system 100 for that VVR), then the carrier 2 shipping rules are analyzed against the booking information provided by the shipper 4. If the business rules engine 106 determines the shipper 4 satisfies the carrier's 2 shipping business rules, then this is indicated on the user interface 110. If, however, the shipper 4 fails the carrier's 3 shipping business rules (e.g., missing a contract number with the carrier 2), then the shipper 4 will have the option to return to a booking request webpage to update the booking and submit this updated booking as an IC request. Alternatively, the shipper 4 may continue the booking as a normal booking request, in which case an instant confirmation may not be possible for the booking.

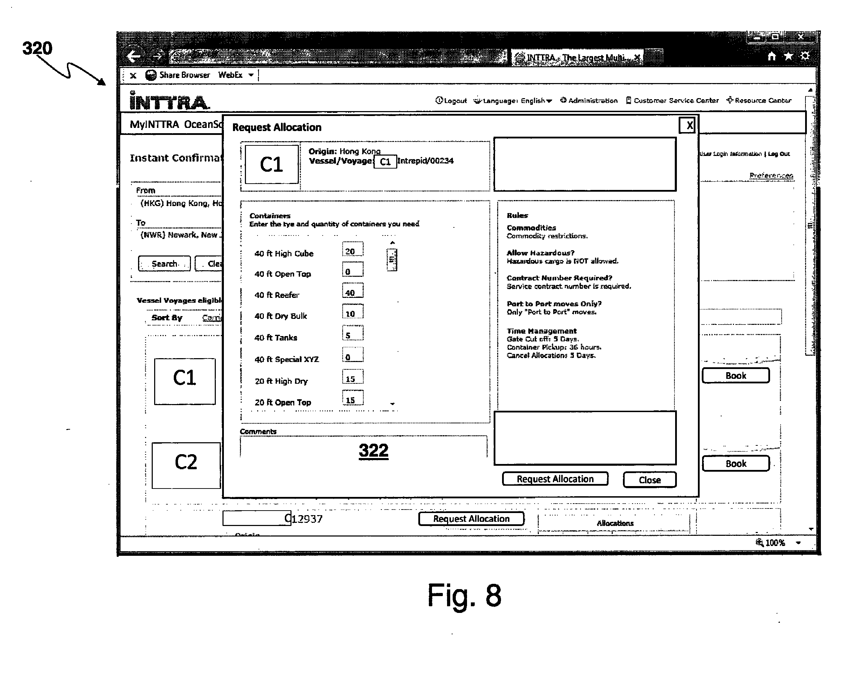

The system 100 also allows a shipper 4 to request an additional allocation of IC slots from a carrier 2. For example, if a shipper 4 attempts to make a booking but the pre-allocated slots for the desired VVR are insufficient for that booking, the system 100 supports an option that allows the shipper 4 to communicate with the carrier 2 to request more slots. By way of example, each entry 312 may have an associated "Request Allocation" button or the like. When clicked, the shipper 4 is taken to a new web page 320, shown in Figure 8, which allows the shipper 4 to indicate the respective numbers of slots desired by container type. Additionally, a field 322 may permit the shipper 4 to input freeform text. Once the shipper 4 has finished entering the desired data, the shipper 4 may click a "Request Now" button. The populated information, including the freeform text, is forwarded to the carrier 2, together with identifying information of the shipper 4. Any suitable method may be used to relay this information, such as via email, internal messages within the system 100, or the like. In this manner, the system 100 permits shippers 4 to forward requests to carriers 2, and carriers 2 to get a better idea about the needs of their customers. In response to receiving such a slot allocation request, a carrier 2 could, for example, then pre-allocate more slots for the related VVR.

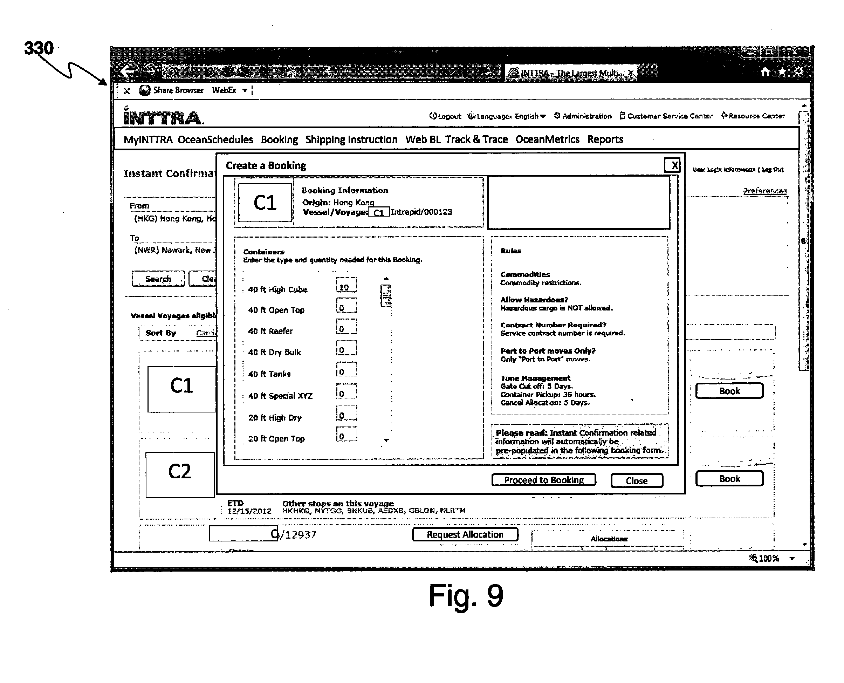

By way of example, an IC booking is shown in the following. When presented with the VVR list 310, the shipper 4 clicks on a "Book" button related to the desired entry 112. The user interface 110 then presents a slot allocation page 330, as shown in Figure 9, which allows the shipper 4 to request allocation of slots by way of the respective numbers of each type of container desired. Because there is a presumption of using IC, the related shipping rules for the selected VVR are also presented. Once the shipper 4 has indicated the desired slot allocation by way of the number and type of each container, the shipper 4 may click a "Proceed to Booking" button. At that point, the slots relating to the desired allocation are reserved in the database 108 and thus inaccessible to other would-be IC shippers 4. This is to prevent inadvertent double-booking of slots. This reservation expires if a successful booking is not made within a predetermined amount of time. The time to wait should be sufficient to allow the shippers 4 adequate time to fill in a booking request page 340, discussed below, but not so long as to pointlessly tie up otherwise available slots for booking purposes. This reservation time may vary, for example, depending upon the actual number of slots being requested.

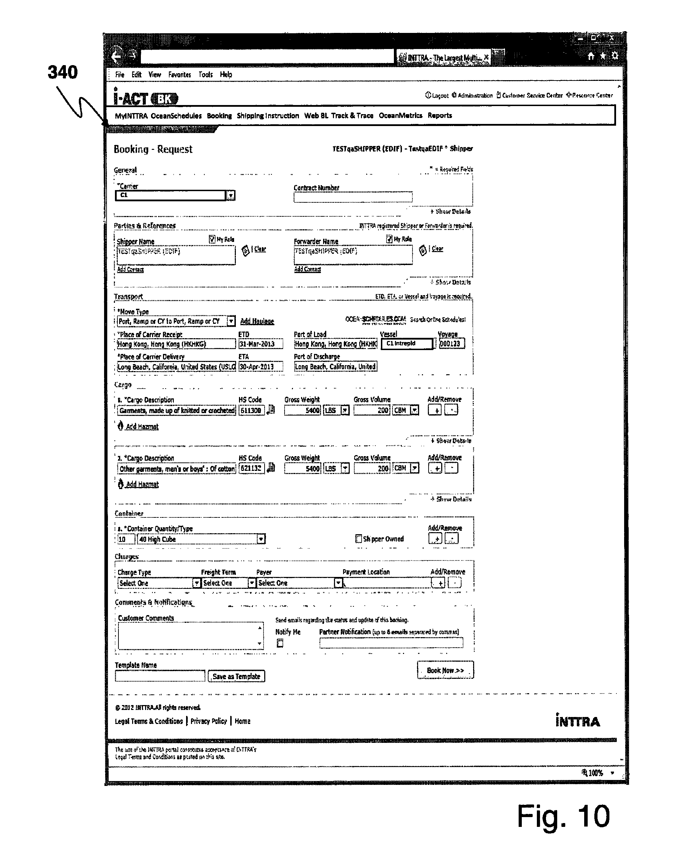

Thereafter, the shipper 4 is brought to the booking request page 340, as shown in Figure 10. The booking request page 340 has numerous fields, many of which are pre-populated based upon the instant confirmation information already available to the system 100. These fields permit the shipper 4 to provide shipping information related to the booking request. Example fields include: carrier 2 name, contract number the shipper 4 has with the carrier 2 (if any), shipper 4 name, freight forwarder name, the move type, places of carrier 2 receipt and delivery, ports of load and discharge, vessel name and voyage number; commodity type, related HS code, weight and volume; container types and numbers; charge type; freight term; the payer and payment location. Also, a freeform text entry field may be provided for the shipper 4 to provide additional information to the carrier 2. The move type can indicate how a container is picked up and delivered, such as picked up a customer site or the port, and delivered at the port or at a customer site. The booking request screen 340 can be dynamic, allowing the shipper 4 to add and delete additional fields as required, such as fields relating to commodity description, weight and volume, and fields for container quantities and types. Of course, other fields are possible for the booking request screen 340, and those shown are merely illustrative.

Once all of this information has been entered, the shipper 4 may click upon a "Book Now" button to request booking of the slots in accordance with the information entered into the booking request page 340. Also, the shipper 4 may use the populated screen 340 as a basis for creating a template, by clicking a "Create Template" button. Templates created in this manner may be named and subsequently used to populate future booking request pages 340.

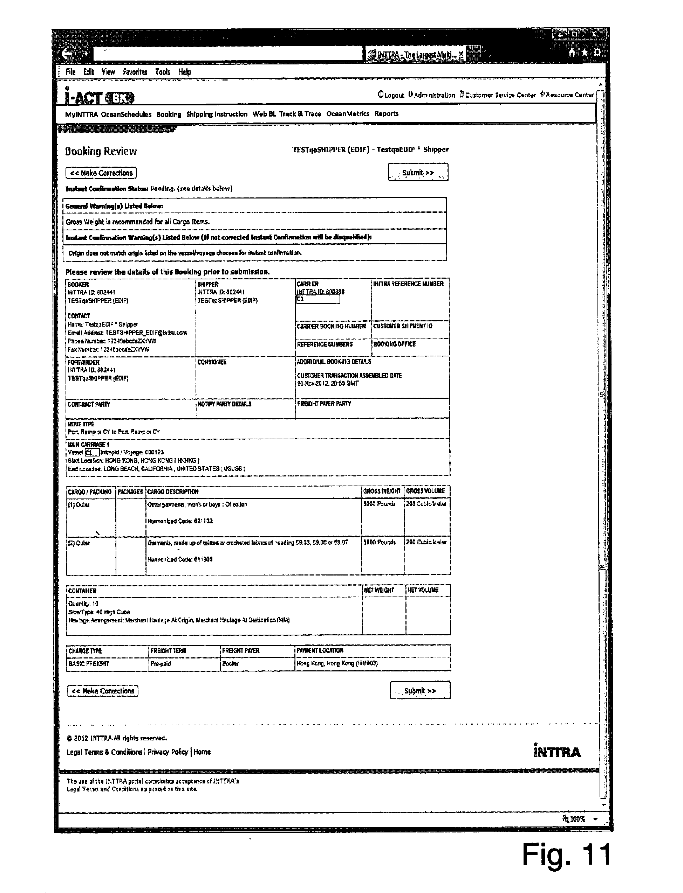

Additionally, if the shipper 4 tries to change information in the booking request page 340 that has been pre-populated and that could adversely affect the ability to receive an instant confirmation of the desired slots, the shipper 4 will be warned accordingly, preferably as the field is being changed. Alternatively, once the "Book Now" button has been clicked and errors are detected that prevent the issuance of an IC confirmation, an error screen can be displayed that indicates the error that occurred. Examples include: an insufficient instant confirmation allocation by the carrier 2 for the requested container type of the selected VVR; the carrier 2 has excluded an entered commodity type for IC purposes; the carrier 2 will not accept hazardous materials for IC purposes; the carrier 2 requires a customer contract number, or any other violation of a shipping business rule associated with the VVR. The shipper 4 is then provided the option to return back to the booking request page 340 and make modifications in order to make the booking IC eligible, or to continue the booking as a non-IC booking (i.e., a regular booking). An example of such an error page is shown in Figure 11, in which a problem with IC booking is highlighted to the shipper, and two buttons are provided: one to continue with the booking in a conventional manner, and the other to return back to the booking request page 340.

In certain embodiments, when making a booking that contains a plurality of slots, the shipper 4 is given an option by the system 100 of either accepting a single OCBN for all of the slots being reserved, or being provided a separate OCBN for each slot, using any suitable user interface, such as a checkbox or the like.

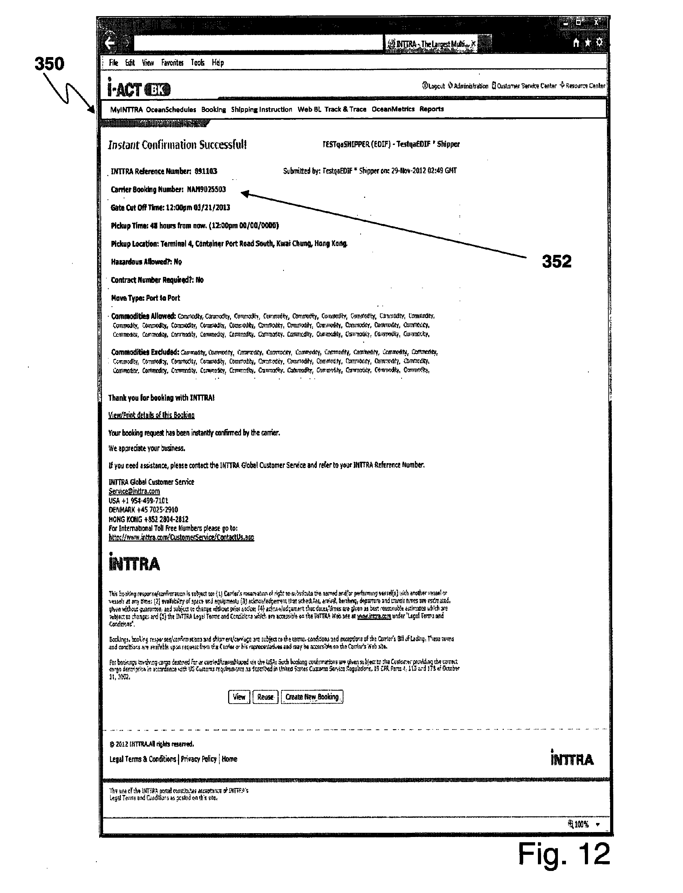

A succesful IC booking page is illustrated in Figure 12. As shown in Figure 12, a page 350 indicating successful IC booking may include various information, such as an internal reference number generated by the system 100; gate cut-off time; pick-up time and location, move type, excluded or included commodity types, etc. Most siginficantly, however, is that the IC confiration page 350 incudes one or more IC confimration numbers 352 for the reserved slots. The shipper 4 can then use this IC confimration number (or numers) 352 when delivering cargo to the container yard for pick-up. If multiple IC confirmation numbers are provided, the IC confirmation page 350 preferably indicates which IC confirmation numbers correspond to which slots, or provides a separate IC confirmation page 350 for each reserved slot with a respective IC confirmation number thereon. As indicated earlier, the IC confirmation number(s) 352 can be an OCBN provided by the carrier 2, or be selected from a range of OCBNs previously provided by the carrier 2, as discussed above. In other embodiments, however, the IC confirmation number 352 may be created by the system 100 using any suitable algorithm.

The carrier 2, in turn, is notified about the confirmed IC booking and the related IC confirmation number(s) 352; this IC booking notification preferably includes all information related to the booking (i.e., most or all of the information entered in the booking request page 340) as well as the IC confirmation number(s) 352. The IC booking confirmation for the carrier 2 may be sent through email notification, for example, by way of an internal message within the system 100, delivered through EDI or the like.

Because customer contract numbers are of signifcant importance to many carriers 2, the system 100 does permit a "backout" option for carriers 2 after receiving the IC booking confirmation. Upon receiving the IC booking confirmation, the carrier 2 has the option to confirm the booking or reject it. IC booking requests can be rejected by the carrier 2 for cases where a contract number is required and has been entered incorrectly. By way of example, the IC booking request can be rejected by the carrier 2 by way of a standard booking update that indicates that the booking request has been canceled by the carrier 2. This booking update can be transmitted to the shipper 4 in any suitable manner, such as by way of an EDI message transmitted to the shipper 4 by the carrier 2, and internal message passed to the shipper 4 through the system 100, an EDI message transmitted by the system 100 to the shipper 4, an email, or the like. Unless the booking is explicitly rejected, the system 100 may assume that the carrier 2 has accepted the IC booking. Alternatively, the carrier 2 may explicitly confirm an IC booking and further provide a related OCBN. The system 100 may then forward this OCBN to the shipper 4 as a revised IC confirmation number 352. However, this is less desirable as it has the capability of introducing confusion if the shipper 4 inadvertently uses the first-provided confirmation number as the OCBN, and hence it is preferred that the instant confirmation message include the actual OCBN of the carrier 2. In any event, any suitable method may be used to provide this revised IC confirmation number 352, such as email, EDI, internal messages within the system 100 or the like.

It will be appreciated that the above system may also be implemented by a carrier 2 wishing to provide instant confirmation of slots on its various voyages. In such embodiments, the database 108 keeps track of slots that have been reserved by other sources in a conventional manner, such as freight forwarders and the like, as well as keeping track of slots being reserved by the IC system 100 itself. The system 100 would also contain route information, such as the various vessels and their related voyages, departures dates and times, arrival dates and times, and the like, which is searchable by a potential shipper 4, as previously discussed. The carrier 2 may pre-allocate some or all of the slots on its various voyages to the system 100, but does not necessarily accept pre-allocation of slots from other carriers 2. Otherwise, the system 100 for such a single-carrier 2 embodiment may functional substantially the same as the multi-carrier 2 embodiments discussed above.

Those skilled in the art will recognize that the present invention has many applications, may be implemented in various manners and, as such is not to be limited by the foregoing embodiments and examples. Any number of the features of the different embodiments described herein may be combined into one single embodiment, the locations of particular elements can be altered and alternate embodiments having fewer than or more than all of the features herein described are possible. Functionality may also be, in whole or in part, distributed among multiple components, in manners now known or to become known.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention. While there had been shown and described fundamental features of the invention as applied to being exemplary embodiments thereof, it will be understood that omissions and substitutions and changes in the form and details of the disclosed invention may be made by those skilled in the art without departing from the spirit of the invention. Moreover, the scope of the present invention covers conventionally known, future developed variations and modifications to the components described herein as would be understood by those skilled in the art.

## Claims

1. A method for reserving shipping slots on a vessel, the method comprising:
accepting for pre-allocation from a carrier at least one slot of a voyage on the vessel;
accepting at least one shipping rule for the at least one slot;
accepting a booking request from a shipper to reserve the at least one slot on the vessel;
accepting shipping information corresponding to the booking request;
correlating at least a portion of the shipping information against the at least one shipping rule to determine if the booking request can be accepted; and
in response to determining that the booking request can be accepted:
providing the at least a corresponding carrier booking number to the shipper; and
indicating that the at least one slot is reserved.

2. The method of claim 1 further comprising providing a notification to the carrier that the booking request has been accepted, the notification comprising at least a portion of the shipping information, the con-esponding carrier booking number or both.

3. The method of claim 1 further comprising:
for at least a portion of a plurality of ports of origin for the voyage of the vessel, associating a corresponding vessel voyage record, each vessel voyage record indicating:
one or more slots pre-allocated for booking purposes for the corresponding port of origin; and
one or more carrier booking numbers corresponding to the one or more pre-allocated slots.

4. The method of claim 3 wherein each vessel voyage record further comprises one or more shipping rules.

5. The method of claim 3 further comprising:
accepting container yard information corresponding to a port of origin; and
correlating the container yard information with the vessel voyage record corresponding to the port of origin.

6. The method of claim 3 further comprising:
providing a plurality of vessel voyages to the carrier;
accepting from the carrier selection of at least one of the vessel voyages;
providing to the carrier a plurality of ports of origin corresponding to the selected vessel voyage; and
accepting from the carrier selection of at least one of the provided ports of origin;
wherein a vessel voyage record corresponding to the selected vessel voyage and the selected port of origin is used to store information of: the pre-allocation of the at least one slot, the at least a carrier booking number and the at least one shipping rule.

7. The method of claim 3 further comprising:
accepting a search request from the shipper;
in response to the search request, providing a plurality of search results respectively indicting a plurality of vessel voyages from ports of origin that each satisfy the search request;
accepting selection of at least one of the search results as the booking request from the shipper to reserve the at least one slot on the vessel, the vessel corresponding to the selected search result; and
utilizing the business rules in the vessel voyage record corresponding to the vessel voyage and port of origin of the selected search result to determine if the booking request can be accepted.

8. The method of claim 1 wherein the at least a business rule comprises requiring a contract number in the shipping information.

9. The method of claim 1 wherein the at least a business rule comprises a date threshold and the method further comprises cancelling the pre-allocation of the at least a slot when the date threshold is exceeded.

10. The method of claim 1 wherein the business rules comprise at least one of: a shipper to include for reservations, a commodity to exclude for reservations, and acceptance of hazardous materials.

11. The method of claim 1 wherein the method further comprises accepting a plurality of carrier booking numbers from the carrier, and selecting at least one of the plurality of carrier booking numbers as the corresponding carrier booking number that is provided to the shipper, and indicating that the at least one booking number is used.

12. The method of claim 1 wherein the method further comprises contacting the carrier to receive the corresponding carrier booking number.

13. A system for reserving shipping slots on a vessel, the system comprising:
at least a central processing unit;
communications hardware coupled to the at least a central processing unit and configured to communicate with a carrier and a shipper; and
memory coupled to the at least a central processing unit and comprising a database and program code, the program code executable by the at least a central processing unit to perform steps comprising:
accepting for pre-allocation from the carrier at least one slot of a voyage on the vessel and storing information corresponding to the pre-allocation of the at least one slot in the database;
obtaining at least a corresponding carrier booking number for the at least one slot and storing information corresponding to the at least a corresponding carrier booking number in the database;
accepting at least one shipping rule for the at least one slot and storing information corresponding to the at least one shipping rule in the database;
accepting a booking request from the shipper to reserve the at least one slot on the vessel;
accepting shipping information from the shipper corresponding to the booking request;
utilizing the database to correlate at least a portion of the shipping information against the at least one shipping rule to determine if the booking request can be accepted; and
in response to determining that the booking request can be accepted:
providing the at least a corresponding carrier booking number to the shipper; and
indicating in the database that the at least one slot is reserved.

14. The system of claim 13 wherein the program code is further configured to cause the at least a central processing unit to provide a notification to the carrier that the booking request has been accepted, the notification comprising at least a portion of the shipping information, the at least a carrier booking number or both.

15. The system of claim 13 wherein the program code is further configured to cause the at least a central processing unit to perform steps comprising:
for at least a portion of a plurality of ports of origin for the voyage of the vessel, associating a corresponding vessel voyage record in the database, each vessel voyage record indicating:
one or more slots pre-allocated for booking purposes for the corresponding port of origin; and
one or more carrier booking numbers corresponding to the one or more pre-allocated slots.

16. The system of claim 15 wherein each vessel voyage record further comprises one or more shipping rules.

17. The system of claim 15 wherein the program code is further configured to cause the at least a central processing unit to perform steps comprising:
accepting container yard information corresponding to a port of origin; and
saving the container yard information in the vessel voyage record corresponding to the port of origin.

18. The system of claim 15 wherein the program code is further configured to cause the at least a central processing unit to perform steps comprising:
providing a plurality of vessel voyages to the carrier;
accepting from the carrier selection of at least one of the vessel voyages;
providing to the carrier a plurality of ports of origin corresponding to the selected vessel voyage; and
accepting from the carrier selection of at least one of the provided ports of origin;
wherein a vessel voyage record corresponding to the selected vessel voyage and the selected port of origin is used to store information of: the pre-allocation of the at least one slot, the at least a carrier booking number and the at least one shipping rule.

19. The system of claim 15 wherein the program code is further configured to cause the at least a central processing unit to perform steps comprising:
accepting a search request from the shipper;
in response to the search request, providing a plurality of search results respectively indicting a plurality of vessel voyages from ports of origin that each satisfy the search request;
accepting selection of at least one of the search results as the booking request from the shipper to reserve the at least one slot on the vessel, the vessel corresponding to the selected search result; and
utilizing the business rules in the vessel voyage record corresponding to the vessel voyage and port of origin of the selected search result to determine if the booking request can be accepted.

20. The system of claim 13 wherein the at least a business rule comprises requiring a contract number in the shipping information.

21. The system of claim 13 wherein the at least a business rule comprises a date threshold and the program code is further configured to cause the at least a central processing unit to cancel the pre-allocation of the at least a slot when the date threshold is exceeded.

22. The system of claim 13 wherein the business rules comprise at least one of: a shipper to include for reservations, a commodity to exclude for reservations, and acceptance of hazardous materials.

23. The system of claim 13 wherein obtaining the at least a corresponding carrier booking number comprises accepting from the carrier a plurality of carrier booking numbers, and selecting at least one of the plurality of carrier booking numbers as the at least a corresponding carrier booking number that is provided to the shipper, and indicating that the at least a corresponding carrier booking number is reserved.

24. The system of claim 13 wherein obtaining the at least a corresponding carrier booking number comprises contacting the carrier to receive the at least a corresponding carrier booking number.

25. The system of claim 13 wherein obtaining the at least a corresponding carrier booking number comprises generating the at least a corresponding carrier booking number.

26. A system for reserving shipping slots on a vessel, the system comprising:
at least a central processing unit;
communications hardware coupled to the at least a central processing unit and configured to communicate with a shipper; and
memory coupled to the at least a central processing unit and comprising a database and program code, the program code executable by the at least a central processing unit to perform steps comprising:
utilizing the database to determine availability of at least one slot of a voyage on a vessel;
associating at least a corresponding carrier booking number for the at least one slot and storing information corresponding to the at least a corresponding carrier booking number in the database;
creating at least one shipping rule for the at least one slot and storing information corresponding to the at least one shipping rule in the database;
accepting a booking request from a shipper to reserve the at least one slot on the vessel;
accepting shipping information from the shipper corresponding to the booking request;
utilizing the database to correlate at least a portion of the shipping information against the at least one shipping rule to determine if the booking request can be accepted; and
in response to determining that the booking request can be accepted:
providing the at least a corresponding carrier booking number to the shipper; and
indicating in the database that the at least one slot is reserved.
